# EUROPEAN PATENT APPLICATION

(11) **EP 0 634 091 A1**
(43) Date of publication of application: **18.01.1995**
(21) Application number: 94304181.4
(22) Date of filing: 10.06.1994
(51) Int. Cl.: A01D 34/74

(54) **Mower**

(30) Priority: 11.06.1993 GB 9312110
(71) Applicant: KVERNELAND KIDD LIMITED, Devizes, Wiltshire SN10 2HP (GB)
(72) Inventor: Griffiths, Edward Peter, Devizes, Wiltshire, SN10 1PH (GB)
(74) Representative: Carpenter, David

(57) **Abstract**

A rotary mower is disclosed which comprises at least one mowing drum (24) depending from a support frame (10, 12), the or each mowing drum (24) comprising a cutter member (26) including at least one cutting blade (46), the cutter member (26) being arranged to be rotated about its axis by a drive shaft (20), a skid plate assembly (58, 60, 62) located below and spaced apart from the cutter member (26), in use, and a plurality of slide members (28) spaced apart from one another and spaced apart from the axis of the cutter member (26), the slide members (28) permitting axial movement of the cutter member (26) with respect to the drive shaft (20) and transmitting rotational movement of the drive shaft (20) to the cutter member (26).

## Description

This invention relates to an agricultural mower of the kind including a plurality of rotary mowing drums supported on a frame arranged to be propelled by a tractor or the like.

In a known mower of the kind specified, the mowing drums are supported upon a wheeled frame arranged to be towed behind a tractor which also drives the mowing drums. Each of the mowing drums is rotatable on said frame and driven by a respective drive shaft. Each drum includes at least one mowing blade, and a skid plate located below each drum and arranged to contact the ground, in use preventing the or each blade from coming into contact with the ground and setting the cutting height of the mower. In particular, the present invention relates to a mower incorporating a mechanism for adjusting the position of the or each blade in order to provide for adjustment of the cutting height.

According to the present invention there is provided a rotary mower comprising at least one mowing drum depending from a support frame, the or each mowing drum comprising a cutter member including at least one cutting blade, the cutter member being arranged to be rotated about its axis by a drive shaft, a skid plate assembly located below and spaced apart from the cutter member, in use, and a plurality of slide members spaced apart from one another and spaced apart from the axis of the cutter member, the slide members permitting axial movement of the cutter member with respect to the drive shaft and transmitting rotational movement of the drive shaft to the cutter member.

A drive disc is preferably mounted on the drive shaft so as to be rotatable therewith, the slide members being in sliding engagement with the drive disc to permit axial movement of the cutter member with respect to the drive shaft, whilst transmitting rotary motion from the drive shaft to the cutter member.

The slide members preferably comprise three equiangularly spaced support rods which extend vertically, in use. Each support rod preferably extends through a respective aperture provided in the drive disc. A bearing bush is preferably provided in each of the apertures.

Desirably, a support member is spaced apart from and carried by the drive disc, the slide members being in sliding engagement with the support member.

Conveniently, the cutter member includes an extension arranged to engage with the upper end of each slide member.

Preferably means for adjusting the axial position of the cutter member with respect to the drive shaft is provided. The means for adjusting preferably comprises screw adjustment means provided between the extension of the cutter member and the support member.

The extension preferably takes the form of a guard restricting access to the drive shaft.

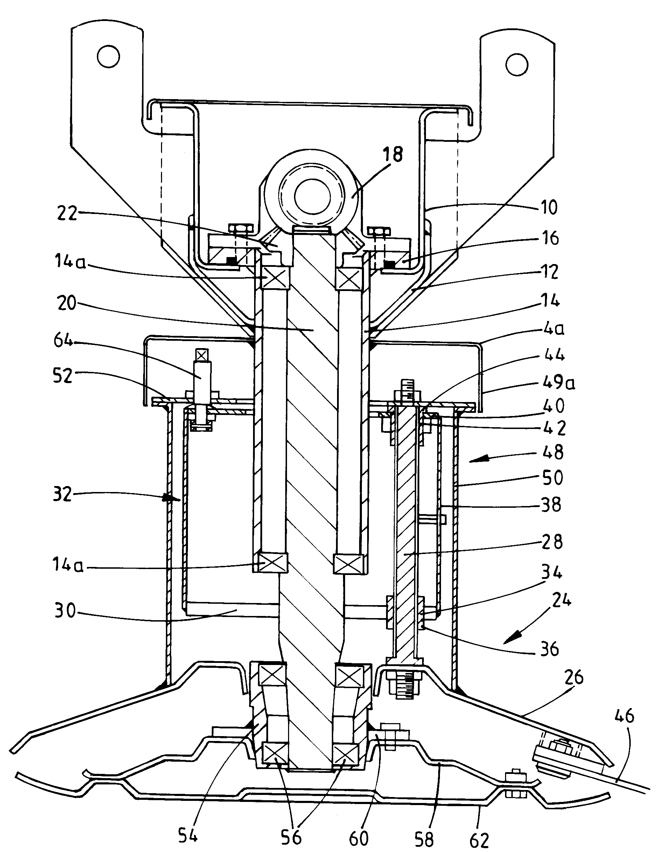

The invention will further be described by way of example with reference to the accompanying drawing which is a sectional view of a drum of a rotary mower.

The accompanying drawing shows part of an agricultural rotary drum mower which comprises an elongate generally rectilinear steel frame constructed of elongate steel channels 10, 12 which are welded to one another. The frame includes suitable couplings to allow the mower to be supported by and towed behind a suitable agricultural vehicle, for example, a tractor, with the frame disposed perpendicular to the direction of travel.

Rigidly fixed to the frame are four parallel hollow, cylindrical bearing support members 14 (only one of which is shown in the drawing) extending at right angles to the frame, vertically in use. The members 14 are equally spaced along the length of the frame and project downwardly therefrom, each including, at its upper end, a flange 16 whereby the member 14 is bolted to the inner face of the base of the channel 10 of the frame. The members 14 are further secured in position by extending through and being welded to the base region of the channel 12 which is coextensive with the channel 10.

Housed within the recess of the channel 10 and supported for rotation in suitable bearings are three axially aligned drive transmission shafts, the shafts being spaced apart by a small amount at their ends. The shafts are disposed respectively between the axes of the first and second members 14, the second and third members 14 and the third and fourth members 14, and at each end each shaft carries a bevel gear 18. Supported in each member 14 by bearings 14a which permit rotational but not axial movement is a respective drive shaft 20. Each shaft 20 projects from both the upper and lower ends of its respective member 14 and adjacent its upper end, each shaft 20 carries a bevel gear 22 meshing with the or each respective bevel gear 18. The bevel gears 18, 22 are of the same size and thus rotation of any one of the shafts drives the other shafts and the drive shafts 20 at the same speed. The shaft intermediate the centre pair of drive shafts 20 carries a further bevel gear meshing with a bevel gear driven in use from the power take-off shaft of the towing tractor. A 2:1 gear ratio is provided at these bevel gears so that the drive shafts 20 are driven from the tractor power take-off at double the speed thereof.

As an alternative to using three axially aligned drive transmission shafts, a single elongate shaft may be used, the shaft including bevel gears positioned so as to mesh with the bevel gears 22 of the first, second and third members 14, and including a bevel gear arranged to mesh with a corresponding gear driven, in use, from the power take off shaft of a tractor as described above.

Each mowing drum 24 includes a shallow frusto-conical annular cutter disc 26 bolted at its inner periphery to three vertically extending support rods 28 (only one of which can be seen in the drawing) equiangularly spaced around the disc centre. An annular disc 30 forming the lower end of an inner drum 32 is welded or otherwise keyed to a region of the drive shaft 20 extending below the lower end of the bearing support member 14, the disc 30 including, near its outer periphery, three angularly spaced apertures 34 through each of which one of the support rods 28 extends, each rod 28 being slidable in a vertical direction with respect to the disc 30 by virtue of a respective bearing sleeve 36 carried in the respective aperture 34. The side wall 38 of the inner drum 32 comprises a length of steel strip curved to form an open cylinder to the upper end of which is welded an annular steel lid 40 which is provided with three angularly spaced apertures 42 arranged to align with the apertures 34 in the disc 30, the support rods 28 extending through the apertures 42 and being guided for sliding movement in a vertical direction by means of bearings 44 carried by the lid 40. Adjacent its outer edge, the cutter disc 26 carries one or more replaceable, pivoted cutting blades 46.

A guard 48 is provided between the cutter disc 26 and the channel shaped member 10, the guard 48 comprising a cylindrical tube 50 welded at one end to the upper surface of the disc 32, the tube 50 including an annular lid 52 welded to the upper end thereof. The lid 52 includes three angularly spaced apertures near to its inner periphery, the apertures aligning with the apertures 34, 42 in the base 30 and lid 40 of the inner drum 32. The upper end of each support rod 28 extends through and is bolted to the lid 52. The guard 48 further comprises an annular disc 49 welded to the bearing support member 14 and including a downwardly extending peripheral flange 49a.

A skid plate support sleeve 54, taking the form of a tubular sleeve of inner diameter larger than the outer diameter of the drive shaft 20 is attached to the shaft 20 through bearings 56. The purpose of the bearings 56 is to permit the sleeve 54 to rotate relative to the shaft 20. A skid plate support disc 58 is welded to the lower end of the sleeve 54, the disc 58 also being attached to the sleeve 54 by virtue of being bolted to a flange 60 which is welded to the sleeve 54. The disc 58 is downwardly dished, its outer periphery being bolted to a skid plate 62 which takes the form of a disc extending generally horizontally, in use, the edge of the disc being angled upwardly. The diameter of the skid plate 62 is approximately equal to the diameter of the disc 26, the disc 26 and the skid plate 62 defining a chamber from which the blades 46 protrude. The skid plates 62 slide on the ground in use and support part of the weight of the mower spacing the blades 46 from the ground and so determining the height of cut.

It will be understood that in order to adjust the cutting height of the mower, it is necessary to adjust the spacing of the skid plate 62 and the or each respective blade 46. This spacing is adjusted by moving the cutter disc 26 and associated guard 48 vertically. A screw adjustment mechanism 64 interconnects the lid 52 of the guard 48 and the lid 40 of the inner drum 32 to facilitate adjustment of the vertical position of the cutter disc 26, the mechanism being accessible through an aperture in the disc 49 after rotation of the assembly to align the mechanism 64 with the aperture in the disc 49. The cutter disc 26 of each of the four drum assemblies is individually adjustable although usually it will be preferred to set each to the same cutting height.

In a modification to the above described device, the screw adjustment mechanism 64 may be replaced with alternative means for adjusting the axial position of the cutter assembly 26, 28, 50, 52 relative to the support assembly 20, 30, 32, 40, for example by using an arrangement in which a tooth carried by the inner drum 32 engages with a selected one of a plurality of apertures provided in the tube 50 of the guard 48. In alternative embodiments, the adjustment means may be provided in other locations than between the lid 52 of the guard 48 and the lid 40 of the inner drum 32, and in all instances remote control mechanisms may be utilized such that cutting height adjustment can be controlled for example from the tractor cab.

It will be recognised that the slide rods 28 of the cutter assembly and the associated bearings 36, 42 of the support assembly provide a simple yet durable and accurate slide mounting for the height adjustment movement of the cutter assembly.

In a further alternative embodiment, the mowing drums are supported upon a frame arranged to be attached to the front of a tractor or the like by means of a plurality of link arms. In this embodiment, the frame is not supported upon wheels, the mower being arranged to be carried by the tractor.

## Claims

1. A rotary mower comprising at least one mowing drum (24) depending from a support frame (10, 12), the or each mowing drum (24) comprising a cutter member (26) including at least one cutting blade (46), the cutter member (26) being arranged to be rotated about its axis by a drive shaft (20), a skid plate assembly (58, 60, 62) located below and spaced apart from the cutter member (26), in use, and a plurality of slide members (28) spaced apart from one another and spaced apart from the axis of the cutter member (26), the slide members (28) permitting axial movement of the cutter member (26) with respect to the drive shaft (20) and transmitting rotational movement of the drive shaft (20) to the cutter member (26).

2. A rotary motor as claimed in Claim 1, characterized by a drive disc (30) mounted on the drive shaft (20) so as to be rotatable therewith, the slide members (28) being in sliding engagement with the drive disc (30) to permit axial movement of the cutter member (26) with respect to the drive shaft (20), whilst transmitting rotary motion from the drive shaft (20) to the cutter member (26).

3. A rotary mower as claimed in Claim 2, characterized in that the slide member (28) comprise three equiangularly spaced support rods (28) which extend vertically, in use.

4. A rotary mower as claimed in Claim 3, characterized in that each support rod (28) extends through a respective aperture (34) provided in the drive disc (30).

5. A rotary mower as claimed in Claim 4, characterized in that a bearing bush (36) is provided in each of the apertures (34).

6. A rotary mower as claimed in any one of Claims 2 to 5, characterized by a support member (40) spaced apart from and carried by the drive disc (30), the slide members (28) being in sliding engagement with the support member (40).

7. A rotary member as claimed in Claim 6, characterized in that the cutter member (26) includes an extension (50) arranged to engage with the upper end of each slide member (28).

8. A rotary mower as claimed in Claim 7, characterized by means (64) for adjusting the axial position of the cutter member (26) with respect to the drive shaft (20).

9. A rotary mower as claimed in Claim 8, characterized in that the means (64) for adjusting comprises screw adjustment means (64) provided between the extension (50) of the cutter member (26) and the support member (40).

10. A rotary member as claimed in any one of Claims 7 to 9, characterized in that the extension takes the form of a guard (50) restricting access to the drive shaft (20).
